Europäisches Patentamt

European Patent Office

Office européen des brevets

(11) Publication number: **0 358 342**
**A1**

## EUROPEAN PATENT APPLICATION

(21) Application number: 89308144.8

(51) Int. Cl.5: **G01R 29/08**

(22) Date of filing: 10.08.89

(30) Priority: 12.08.88 JP 199790/88

(43) Date of publication of application:
14.03.90 Bulletin 90/11

(84) Designated Contracting States:
DE FR IT

(71) Applicant: NATIONAL SPACE DEVELOPMENT
AGENCY OF JAPAN
4-1, Hamamatsu-cho, 2-chome
Minato-ku Tokyo 105(JP)

(72) Inventor: Arai, Kohei c/o National Space
Development
Agency of Japan 4-1, Hamamatsucho
2-chome
Minato-ku Tokyo(JP)
Inventor: Suzuki, Tsutomu
26-22, Kasuya 3-chome
Setagaya-ku Tokyo(JP)

(74) Representative: Huntingford, David Ian et al
W.P. THOMPSON & CO. Coopers Building
Church Street
Liverpool L1 3AB(GB)

(54) A microwave radiometer.

(57) A microwave radiometer comprising a main an-
tenna (11), a reference antenna (14) displaced from
the main antenna (11), and a multiplying device (15)
for multiplying the respective output signals of the
antennas, is one capable of effecting beam com-
pression. It thus offers the possibility of obtaining an
associated directional characteristic in which the
beam width is equivalently narrowed, and thus real-
ise high-spatial resolution.

**FIG.3A**

EP 0 358 342 A1

# A MICROWAVE RADIOMETER

This invention relates to a high-spatial-resolution microwave radiometer having an antenna which exhibits a narrow-beam-width characteristic with improved mounting adaptability.

A microwave radiometer may be mounted, for instance, on a flying object such as an artificial satellite or aircraft for the purpose of passively receiving electromagnetic waves in the microwave range, which are radiated from the surface of the earth. The radiometer has found applications in a variety of tasks and can be used, for example, for measuring sea surface temperature, the salinity of sea water, soil moisture, etc., on the basis of the observed brightness temperature of the earth's surface.

In such a microwave radiometer, high spatial resolution is attained by narrowing the beam width. Conventionally, this has generally been realised by enlarging the antenna diameter.

In the field of so-called active-microwave measuring apparatuses, such as radar, which perform measurement on an object by irradiating it with a beam, various beam compression techniques have been proposed, according to which, beam-widths narrower than that of conventional linear antennas can be realised by employing a variety of antennae: multiplicative type antenna, a frequency multiplier type antenna, a self-focusing type antenna, a temporal and spatial modulation type antenna and conducting non-linear signal processing. In particualr, the beam compression technique employing a multiplicative type antenna has long been studied and has long existed in practical use.

In a passive microwave radiometer which measures the physical and chemical properties of an object by receiving the electromagnetic waves radiated from the object, a narrow beam width is realised, as stated above, by enlarging the antenna diameter. However, in order to obtain a narrow beam by thus enlarging the antenna diameter, the antenna used has to be very large; the ESTAR (electronically scanned thinned array radiometer), for example, is as large as 17m x 17m. When mounting such a large antenna on a moving body such as an artifical satellite, various problems are involved, such as the permissible distortion limit and oscillation effects, as well as the configuration and weight limit.

An object of the present invention is to eliminate the aforementioned problems and to thereby improve the resolution of conventional microwave radiometers. The present invention thereby enables the provision of a high-spatial-resolution microwave radiometer which is capable of the resolution required to observe objects with microwaves, in particular those having a relatively long wavelength, without the need to enlarge the antenna diameter.

Another object of this invention is to provide a high-spatial-resolution microwave radiometer which can be more practically mounted on an artificial satellite or the like.

In accordance with the present invention, there is provided a high-spatial-resolution microwave radiometer comprising a main antenna, a reference antenna displaced from the main antenna and both antennas adapted to be used for compressing beams, and a multiplication means for multiplying the output signal from the main antenna by the output signal from the reference antenna.

In a high-spatial-resolution microwave radiometer having the above-described construction, the microwaves radiated from the object to be observed are caught by the main antenna and the reference antenna. The respective output signals of these antennas are then multiplied together by the multiplication means to effect beam compression, thereby obtaining an associated directional characteristic in which the beam width is equivalently narrowed.

Furthermore, in a high-spatial-resolution microwave radiometer in accordance with this invention, the above-mentioned main antenna and reference antenna can be arranged in the vicinity of the focus of a reflector.

With this arrangement, the distance between the main antenna and reference antenna can be shortened, thereby diminishing feeder loss and reducing any errors in brightness temperature measurement, and allowing the antenna to be mounted on a moving body without increasing its size.

By way of example only, specific embodiments of the present invention will now be described with reference to the accompanying drawings, in which:

Fig .1 illustrates the basic principle of beam compression;

Figs. 2A to 2C show the respective directional characteristics of the main antenna and the reference antenna as well as an associated directional characteristic obtained therefrom;

Figs. 3A and 3B are, respectively, a schematic diagram showing the construction of a first embodiment of the high-spatial-resolution microwave radiometer of this invention and a circuit diagram of the signal processing section thereof;

Figs. 4A to 4C are diagrams showing the respective directional characteristics and the associated directional characteristic of the two antennas in the first embodiment;

Fig.5 is a schematic view showing the construction of a second embodiment of this invention;

Fig.6 is a circuit diagram showing the circuit configuration of the signal processing section in a third embodiment of this invention;

Figs. 7A to 7C are diagrams showing the respective directional characteristics and the associated directional characteristic of the two antennas in the third embodiment; and

Figs. 8A and 8B are diagrams showing the theoretical and actual values of the directional characteristics in a fourth embodiment of this invention.

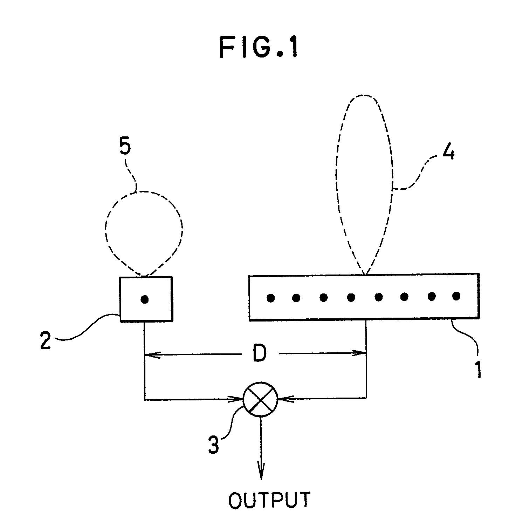

First, the basic principle of the beam compression technique applicable to the high-spatial-resolution microwave radiometer of this invention will be explained with reference to Fig.1, which shows a main antenna 1 comprising an array antenna in which a plurality of radiation elements are linearly arranged. A reference antenna 2 is separated from the centre of the main antenna 1 by a distance D. This distance D must be equal to the dimension (effective aperture length) of the main antenna 1. A multiplication means 3 multiplies the output of the main antenna 1 by that of the reference antenna 2. Reference numerals 4 and 5 indicate the respective directional patterns of the main antenna 1 and the reference antenna 2.

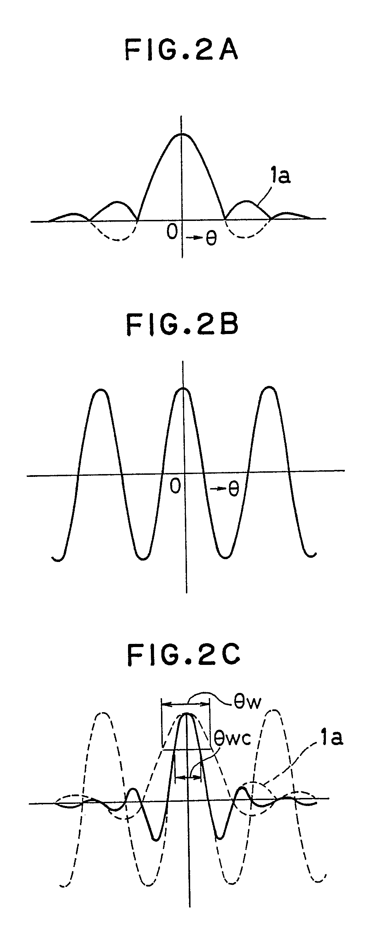

In the beam compression means having the above-described construction microwaves received by the antennas are co-ordinated in phase and input to the multiplication means 3. The microwave outputs are then multiplied together by means of the multiplication means 3. That is, the main antenna directional characteristic shown in Fig.2A is multiplied by the reference antenna directional characteristic shown in Fig.2B, thereby obtaining the associated directional characteristic as shown by a solid line in Fig.2C.

As will be appreciated from Fig.2C, by multiplying the respective outputs of the antennas together, a -3dB beam width $\theta wc$, which is equivalent to about one half of the -3dB beam width $\theta w$, of the main antenna 1, can be obtained. With this arrangement, the antenna dimension can be half that when no beam compression technique is used. Generally speaking, the beam width of the reference antenna does not constitute the beam compression factor.

Furthermore, as will be appreciated from Fig.2C, the side-lobe level 1a of the main antenna 1 is reduced in the associated directional characteristic. Thus, this beam compression technique also makes it possible to restrain the side-lobes, thereby improving the signal-to-noise (S/N) ratio.

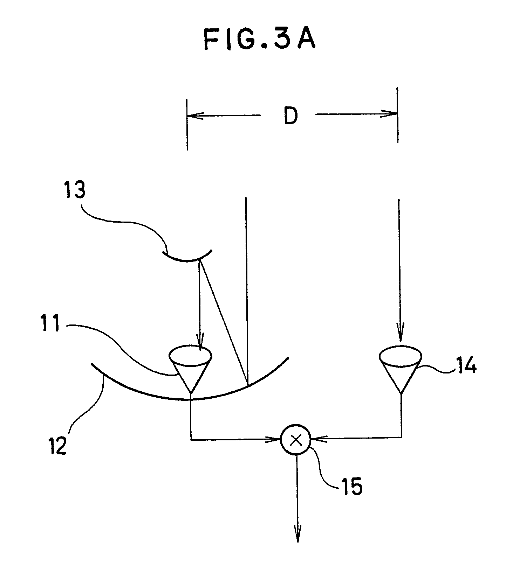

The first embodiment in accordance with the present invention, illustrated in Fig.3A, employs, as the main antenna, a Cassegrain-type antenna which exhibits a narrow directional characteristic. The embodiment shown includes a main horn antenna 11, a main reflector 12 disposed behind the main horn antenna 11 and formed as a paraboloid, a sub-reflector 13 disposed in front of the main horn antenna 11 and formed as hyperboloid, and a reference horn antenna 14 which is arranged beside the main reflector 12 and which is of the single-horn type exhibiting a broad directional characteristic. The distance D between the main horn antenna 11 and the reference horn antenna 14 is determined to be equal to the diameter of the main reflector 12. The embodiment further includes a mutliplier 15 for multiplying together the respective outputs of the antennas 11 and 14.

In a high-spatial-resolution microwave radiometer having the above-described construction, electromagnetic waves radiated from the earth's surface reach the main horn antenna 11 by way of the main reflector 12 and the sub-reflector 13. As for the reference horn antenna 14, it directly receives the electromagnetic waves. The output of the main horn antenna 11 and that of the reference horn antenna 14 are then input to the multiplier 15 and are multiplied together, whereby an associated directional characteristic exhibiting a narrow beam width is obtained.

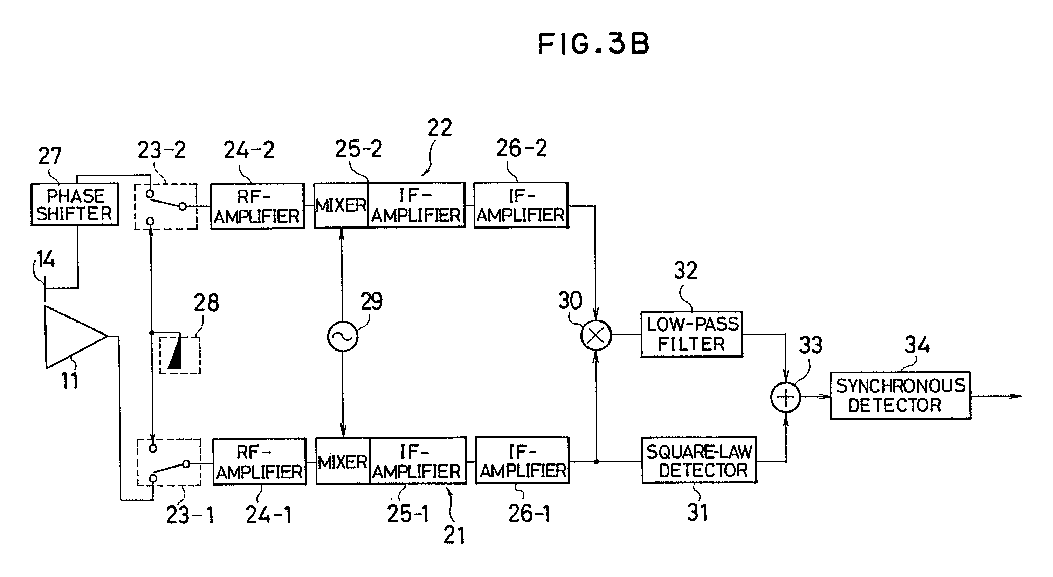

As shown in Fig.3B, the signal processing section for performing the multiplication inputs the respective reception outputs of the main antenna 11 and the reference antenna 14 to the beam compression means which consists of a Dicke-type receiver including two systems. The circuit shown includes a main antenna 11, a reference antenna 14, a main channel 21, and a reference channel 22. The main channel 21 comprises a switch 23-1 consisting of a PIN-diode, an RF-amplifier 24-1, a mixer and IF-amplifier 25-1, and an IF-amplifier 26-1. The reference channel 22 comprises a phase shifter 27, a PIN-diode switch 23-2, an RF-amplifier 24-2, a mixer and an IF-amplifier 25-2, and an IF-amplifier 26-2. A comparison noise source 28 provides a reference for comparison with the antenna noise output. The amplifier gain is adjusted in such a manner that the difference between the comparison noise source and the antenna output noise is reduced to zero. The reference numeral 29 indicates a local oscillator.

The amplified outputs of the respective channels 21 and 22 are multiplied together by the multiplier 30. Then, a signal which is obtained by detecting the output of the main channel 21 by means of a square-law detector 31 is added, by means of an addition circuit 33, to an output signal which is obtained by passing the output of the multiplier 30 through a low-pass filter 32. The output of this addition circuit 33 is then detected by a synchronous detector 34, whereby the radiometer output is obtained.

The above-mentioned square-law detector 31 is used to adjust any negative output value in side lobes of the multiplier 30 ouptut to zero, or to small positive values in order to avoid a masking effect that would result from negative side lobes, which side lobes may occur when, through multiplication of the output of the main channel 21 with that of the reference channel 22, the side lobe of the associated directional characteristic exhibits a negative value. Since this negative value of the side lobe adversely affects the radiometer output, it is necessary to provide the aobve-mentioned square-law detector 31 so that any negative value the side lobe exhibits may be adjusted to zero or a small positive one. The adjustment to zero value is effected by adding, by means of the addition circuit 33, the output of the square-law detector 31 to the associated output obtained through the low-pass filter 32, thereby preventing any negative side lobe from being generated.

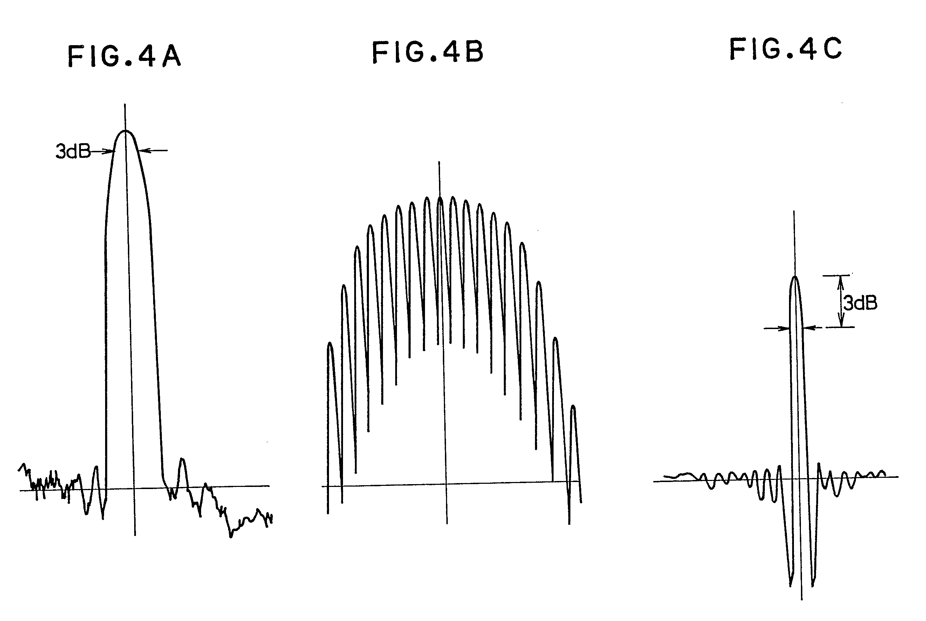

Figs. 4A and 4B show the respective directional characteristics of the main antenna and the reference antenna in this embodiment. The latter exhibits a grating lobe structural pattern. Fig.4C shows the associated directional characteristic obtained by multiplying together the respective outputs of the two antennas. It will be appreciated from these directional characteristics that the beam width has been narrowed.

In the embodiment shown in Figs. 3A and 3B, the reference antenna 14 is disposed beside the main reflector 12, so that the distasnce between this antenna 14 and the electronic equipment for processing the antenna output, such as the multiplier, is long. As a result, the feeder section has to be relatively long, which, due to the problems regarding phase adjustment, feeder loss, etc., leads to errors in the measurement of brightness temperature, and further, makes the device unsuited to be mounted on a moving body such as an artificial satellite since the antenna would then be excessively large.

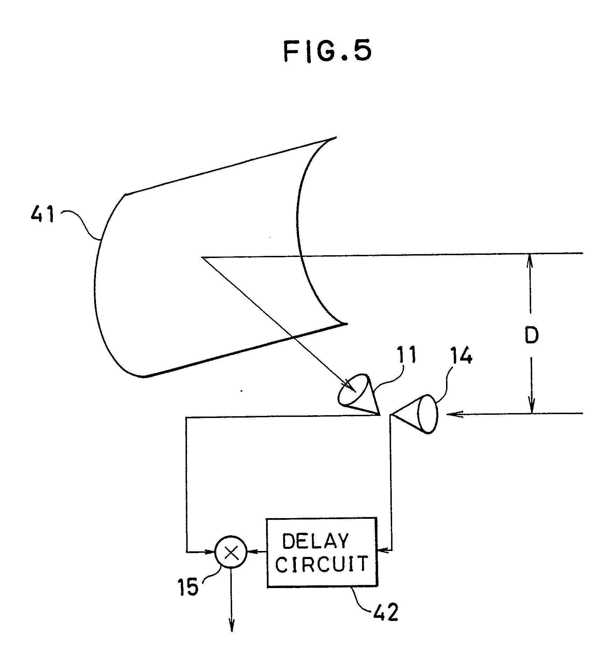

Fig.5 shows a second embodiment of this invention which has been contrived to eliminate the problems mentioned above. In this embodiment, a main horn antenna 11 and a reference horn antenna 14 are arranged together in the vicinity of the focus of a cylindrical reflector 41. The distance D between the centre of the reflector 41 and the reference horn antenna 14 (the distance in the direction perpendicular to the bore-sight) is determined to be equal to the size of the reflector 41. The size of the reflector 41 is represented as the distance between the edges of the arc surface. In this case, it is necessary to arrange a delay circuit 42 on the output side of the reference horn antenna 14, the output of the delay circuit 42 being input to a multiplier 15 so that the effect obtained with this embodiment can be equivalent to the one obtained in the case where the main horn antenna 11 and the reference horn antenna 14 are arranged in the same plane. With this arrangement, the delay time due to the distance in the direction of bore-sight between the reflector 41 and the reference horn antenna 14 can be corrected.

By thus arranging the main horn antenna 11 and the reference horn antenna 14 in the vicinity of the focus of the reflector 41, the feeder section extending up to the signal processing section such as the multiplier 15, etc. becomes naturally shorter, which leads to a reduction in feeder loss. Furthermore, since the reference horn antenna 14, the multiplier 15, the delay circuit 42, etc. can be formed integrally, the antenna does not have to be made larger, which makes the microwave radiometer better adapted for mounting on an artificial satellite or the like. The signal processing section for multiplication has the same construction as that shown in Fig.3B.

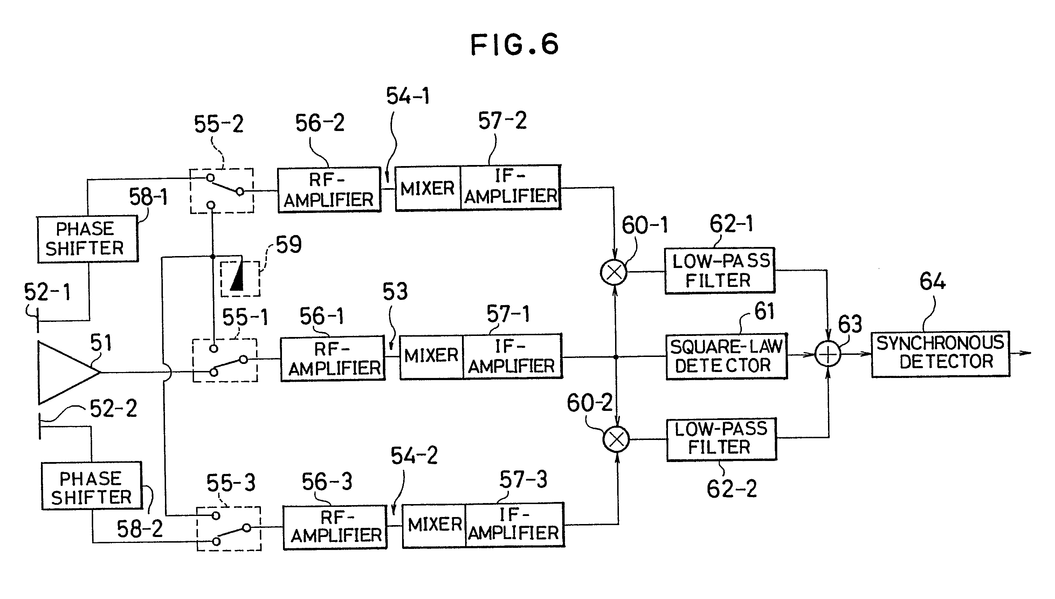

Fig.6 is a schematic circuit diagram showing the circuit configuration of a third embodiment of this invention. This embodiment employs a wide-edge vertical slot array antenna 51 (the number of radiation elements N = 21, the wavelength $\lambda$ = 3.2cm) as the main antenna, constituting an X-band microwave radiometer using two horn-type antennas 52-1, 52-2 as the reference antennas. Here, the two reference antennas 52-1 and 52-2 are respectively separated from the main antenna 51 by the distance D which is equal to the dimension of the main antenna 51. Since in this embodiment two reference antennas are used, the respective reception outputs of the three antennas are input to a beam compression means which consists of a Dicke-type receiver having three systems, and the output obtained by multiplying the output of the main antenna by that of one reference antenna is added to the output obtained by multiplying the output of the main antenna by that of the other reference antenna, thereby obtaining the microwave radiometer output. The reference numeral 53 indicates a main channel. The reference numerals 54-1 and 54-2 indicate first and second reference channels. The main channel 53 comprises a PIN-switch 55-1, an RF-amplifier 56-1, a mixer and IF-amplifier 57-1. The first reference channel 54-1 comprises a phase shifter 58-1, a PIN-switch 55-2, an RF-amplifier 56-2, a mixer and an IF-amplifier 57-2, and the second reference channel .54-2 ccomprises a phase shifter 58-2, a PIN-switch 55-3, an RF-amplifier 56-3, a mixer and an IF-amplifier 57-3. The reference numeral 59 indicates a comparison noise source.

The amplified output of the main channel 53 is multiplied by that of the reference channel 54-1 by means of a multiplier 60-1, and the amplified output of the main channel 53 is multiplied by that of the reference channel 54-2 by means of a multiplier 60-2. Then, a signal obtained by detecting the output of the main channel 53 by means of a square-law detector 61 is added, by means of an addition circuit 63, to respective output signals obtained by passing the multiplication outputs of the multipliers 60-1 and 62-2 through low-pass filters 62-1 and 62-2. The output of the addition circuit 63 is then detected by a synchronous detector 64, thus obtaining the radiometer output.

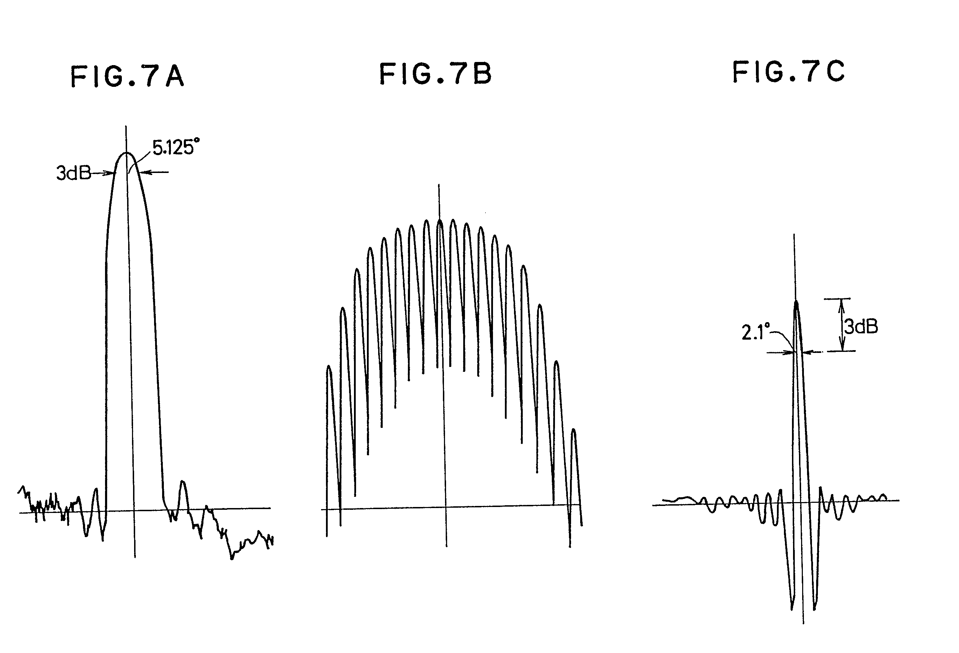

Fig.7A shows the directional characteristic of the main antenna used in the embodiment shown in Fig.6. Its -3dB beam width (beam divergence) is 5.125°. Fig.7B shows the directional characteristic of the two reference antennas, exhibiting a grating lobe structural pattern. Fig.7C shows an associated directional characteristic obtained by multiplying together the respective outputs of these antennas. Its equivalent -3dB beam width divergence is 2.1°, which corresponds to 2.44 in terms of beam compression ratio when compared with that of the main antenna.

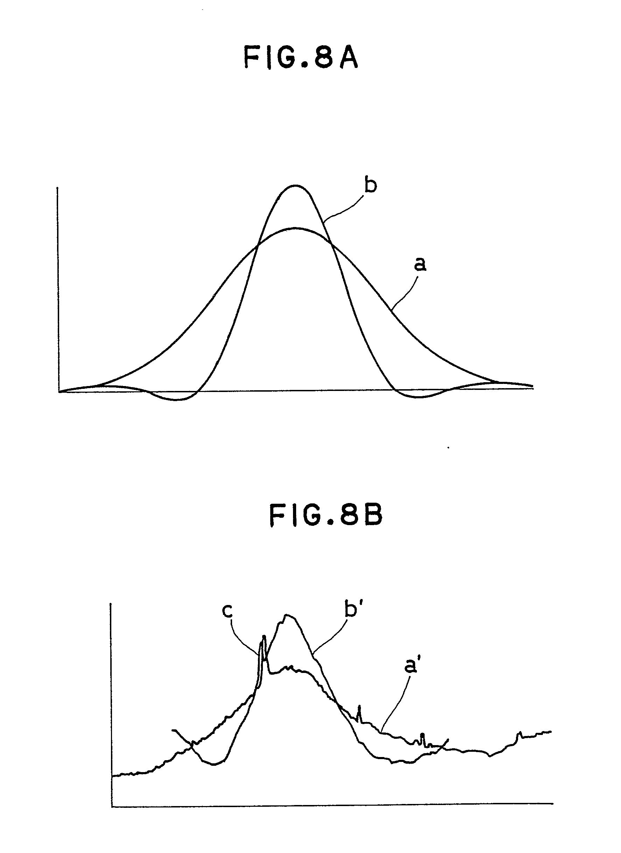

Fig.8A shows the beam compression effect in theoretical values obtained with an L-band microwave radiometer using horn-type antennas as the main and reference antennas. The reference character a indicates the directional characteristic of the main antenna, and the reference character b indicates the compression directional characteristic obtained by associating the respective directional characteristics of the main and reference antennas with each other. Fig.8B shows the measured values obtained by means of the L-band microwave radiometer having the above-described construction. The measured pattern shown was obtained by measuring the solar radiant brightness with the radiometer fixed due south. The reference character a' indicates the directional characteristic of the main antenna, and the reference character b' the directional characteristic after compression processing. The circuit configuration in this embodiment is the same as that in the first embodiment shown in Fig.3B. As will be appreciated from these directional characteristics, it has been confirmed that this embodiment also allows the beam width to be compressed by half. The reference character c in the directional characteristic pattern shown in Fig.8B indicates the noise.

As described above with reference to the preferred embodiments, the microwave radiometer of this invention is designed such that, in addition to the main antenna, reference antennas are provided, making it possible to obtain a narrow-beam characteristic by multiplying together the respective outputs of the two antennas, thus enabling a high-spatial resolution microwave radiometer to be easily realised without the use of a large antenna.

Moreover, by arranging both the reference antenna and the main antenna in the vicinity of the focus of the reflector, the feeder section can be made shorter and measurement errors reduced. At the same time, the antenna can be made compact, which makes it more suitable to be mounted on a moving body such as an artificial satellite.

While in the above-described embodiments the number of reference antennas is one or two, it is not necessarily to be limited to these numbers. Thus, it is also possible to provide three or more reference antennas, in which case, the output of the main antenna will be multiplied by the respective outputs of the reference antennas. By adding the multiplication outputs together, a narrow-beam characteristic can be obtained in the same manner as described above.

Claims

1. A high-spatial resolution microwave radiometer of the type which passively receives electromagnetic waves in the microwave range radiated from the surface of the earth so as to measure the brightness temperature of the earth's surface, characterized by a main antenna (1) having a directional characteristic with a certain beam width, a reference antenna (2) displaced from said main antenna (1) and adapted to be used for beam compression, and a multiplication means (3) for narrowing the beam width of said main antenna (1) by multiplying an output signal from said main antenna (1) by an output signal from said reference antenna (2).

2. A high-spatial resolution microwave radiometer as claimed in claim 1, wherein a Cassegrain-type antenna (11, 12, 13) is employed for said main antenna, and a single-horn type antenna (14) is employed for said reference antenna.

3. A high-spatial resolution microwave radiometer as claimed in claim 1, further comprising an antenna reflector (41) having a focus, said main antenna (11) and said reference antenna (14) being arranged in the vicinity of the focus of said antenna reflector (41).

4. A high-spatial resolution microwave radiometer as claimed in claim 3, wherein the output signal from said reference antenna (14) is input to said multiplication means (15) through a delay circuit (42).

5. A high-spatial resolution microwave radiometer as claimed in claims 1 to 4, wherein said multiplication means (3, 15) is equipped with a Dicke-type receiver (21, 22) having two systems and adapted to amplify respective reception outputs from said main antenna (1, 11) and said reference antenna (2, 14), and a multiplier (30) for multiplying together outputs from said Dicke-type receiver (21, 22) having two systems.

6. A high-spatial resolution microwave radiometer as claimed in claim 1, having a plurality of said reference antennas (52-1, 52-2).

7. A high-spatial resolution microwave radiometer as claimed in claim 6, wherein said multiplication means is equipped with a Dicke-type receiver (53, 54-1, 54-2) having a plurality of systems and adapted to amplify respective reception outputs from said main antenna (51) and said plurality of reference antennas (52-1, 52-2), and including a plurality of multipliers (60-1, 60-2) for multiplying an output signal transmitted from said main antenna (51) and amplified by said Dicke-type receiver (53) by respective output signals transmitted from said plurality of reference antennas (52-1, 52-2) and amplified by said Dicke-type receiver (54-1, 54-2), and an adder (63) for adding together outputs from the respective multipliers (60-1, 60-2).

# FIG.1

OUTPUT

## FIG.2A

## FIG.2B

## FIG.2C

# FIG.3A

# FIG.3B

EP 0 358 342 A1

# FIG.4A

3dB→

# FIG.4B

# FIG.4C

3dB

EP 0 358 342 A1

# FIG.5

FIG.6

FIG.7A    FIG.7B    FIG.7C

## FIG.8A

## FIG.8B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 178 100 (LEVIS)<br>* Column 1, line 16 - column 4, line 9; column 6, line 52 - column 7, line 3; figure 2 * | 1 | G 01 R 29/08 |
| A | | 5,7 | |
| Y | PATENT ABSTRACTS OF JAPAN, vol. 4, no. 51 (P-7)[157], 17th April 1980, page 157 P 7; & JP-A-55 23 451 (KOUDEN SEISAKUSHO K.K.) 19-02-1980<br>* Abstract * | 1 | |
| A | IEEE TRANSACTIONS ON ANTENNAS AND PROPAGATION, vol. AP-34, no. 3, March 1986, pages 432-439, IEEE, New York, US; R.H. OTT et al.: "The effects of reflector antenna diffraction on the interference cancellation performance of coherent sidelobe cancellers"<br>* Page 433; figure 1 * | 2 | |
| A | US-A-3 028 591 (R.L. MATTINGLY)<br>* Column 3, line 67 - column 5, line 52; figures 1-4 * | 3-4 | TECHNICAL FIELDS SEARCHED (Int. Cl.5)<br><br>G 01 R 29/00<br>H 01 Q 3/00<br>H 01 Q 21/00 |
| A | PATENT ABSTRACTS OF JAPAN, vol. 1, no. 98, 31st August 1977, page 2936 E 77; & JP-A-52 32 293 (KODEN SEISAKUSHO K.K.) 02-11-1977 | 6 | |
| A | US-A-4 573 051 (FARINA)<br>* Column 3, line 39 - column 4, line 41; column 6, lines 6-24; figures 1,6 *<br>-/- | 1,3 | |

The present search report has been drawn up for all claims

| Place of search | Date of completion of the search | Examiner |
|---|---|---|
| THE HAGUE | 03-11-1989 | TRELEVEN C. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | PATENT ABSTRACTS OF JAPAN, vol. 5, no. 177 (P-89)[849], 13th November 1981; & JP-A-56 108 944 (MITSUBISHI DENKI K.K.) 28-08-1981 | 1 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 03-11-1989 | TRELEVEN C. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .................................................................
& : member of the same patent family, corresponding
   document

EPO FORM 1503 03.82 (P0401)